# EUROPÄISCHE PATENTSCHRIFT

(11) **EP 3 160 801 B1**
(45) Veröffentlichungstag und Bekanntmachung des Hinweises auf die Patenterteilung: **21.03.2018**
(21) Anmeldenummer: 15728874.7
(22) Anmeldetag: 15.06.2015
(51) Int. Cl.: B60R 21/00, B62J 27/00

(54) **ZWEIRADFAHRZEUG MIT FAHRERSCHUTZSYSTEM**
TWO WHEEL VEHICLE WITH DRIVER PROTECTION SYSTEM
VÉHICULE À DEUX ROUES ÉQUIPÉ D'UN SYSTÈME DE PROTECTION DE CONDUCTEUR

(30) Priorität: 27.06.2014 DE 102014109078
(43) Veröffentlichungstag der Anmeldung: 03.05.2017
(73) Patentinhaber: Doleac, Laurent, 73760 Ostfildern (DE)
(72) Erfinder: Doleac, Laurent, 73760 Ostfildern (DE)
(74) Vertreter: Rüger, Barthelt & Abel
(86) Internationale Anmeldenummer: PCT/EP2015/063357
(87) Internationale Veröffentlichungsnummer: WO 2015/197416

(56) Entgegenhaltungen:
- EP-A2- 1 348 616
- WO-A1-2004/092000
- US-A1- 2002 130 496
- US-A1- 2006 066 091

## Beschreibung

Die Erfindung betrifft ein Zweiradfahrzeug, insbesondere ein Motorrad, ein Quad, ein Dreirad oder ein sonstiges Fahrzeug mit exponiertem Fahrer, mit Fahrerschutzsystem.

Motorräder mit Gurt und/oder Airbagsystemen sind in unterschiedlichen Varianten vorgeschlagen worden, wobei die Grundzielrichtung darin besteht, Kopf und Oberkörper des Fahrers durch einen Airbag in Sitzposition aufzufangen. Dazu beschreibt DE 103 17 439 A1 ein Motorrad mit einem Airbag, der im Lenkerbereich angeordnet ist und den Oberkörper des Fahrers auffangen soll. Zugleich soll ein den Fahrer mit dem Motorrad verbindendes Verbindungselement ein Vorwärtsrutschen des Fahrers auf dem Sitz gestatten und so bremsend kinetische Energie abbauen. Der Fahrer absolviert den Unfall mit aufrechtem Oberkörper.

US 2003/0230886 A1 offenbart ein Motorrad, bei dem der Fahrer mittels eines Beckengurtes während des Unfallvorgangs auf dem Sitz gehalten ist. Ein im Lenkerbereich angeordneter Airbag dient zur Abstützung des aufrecht sitzenden Fahrers.

Ähnlich sieht GB 1 462 125 A einen Fahrerairbag für Oberkörper und Kopf des Fahrers vor, wobei zusätzlich aus einer Fahrzeugverkleidung schräg aufwärts sich entfaltende Seitenairbags vorgesehen sind, um Oberkörper, Schulter und Kopf des Fahrers seitlich abzufangen.

DE 603 140 46 T2 sieht ebenfalls einen im Lenkerbereich angeordneten Fahrerairbag vor, der zweistufig ausgebildet ist. Eine erste Füllstufe verhindert ein Vorwärtsbewegen des Motorradfahrers in einer ersten Phase des Unfallgeschehens. Danach wird ein zweiter Teil des Airbags gefüllt, der in einer zweiten Phase des Unfallgeschehens Kopf und Schultern des aufrecht sitzenden Fahrers schützen soll.

Das Auffangen eines aufrecht sitzenden Fahrers mittels Airbag beschreiben auch US 2004/0256848 A1, JP 2005-153613 A sowie DE 103 08 601 B4. Das seitliche Abstützen des Fahrers während des Unfalls mittels Airbags beschreibt DE 102 102 42 B4. Dort sind Seitenairbags in dem Fahrer seitlich abstützenden Streben angeordnet. DE 102 009 0190 90 B4 beschreibt das Anbringen von Airbags in oder an Spiegeln des Motorrads.

EP 1 348 616 A1 offenbart ein Motorrad mit einem Sicherheitsgurt für den Fahrer sowie einem Airbarg, der sich beim Aufprall vor dem Oberkörper und dem Kopf des Fahrers entfaltet. Nach dem Entfalten des Airbags wird der Sicherheitsgurt gelöst und der Fahrer kann ohne zurückgehalten zu werden auf den entfalteten Airbag prallen.

Aus WO 2004/092000 A1 ist ein Rückhalteeinrichtung für ein Motorrad mit einem Airbag und einem Sicherheitsgurt und einem Airbag bekannt. Während einer ersten Phase eines Unfalls erlaubt der Sicherheitsgurt eine Relativverschiebung zwischen dem Fahrer und dem Motorrad. Der Fahrer kann sozusagen auf dem Motorrad rutschen bzw. sich entlang des Motorrades bewegen. Nach dieser ersten Phase wird der Sicherheitsgurt automatisch gelöst.

Airbagsysteme der genannten Bauart gehen grundsätzlich von einem Unfallgeschehen aus, das dem Umfallgeschehen eines Personenkraftwagens ähnelt.

Es ist Aufgabe der Erfindung, ein Motorrad mit einem Fahrerschutzsystem zu schaffen, das an den typischen und spezifisch bei Motorrädern oder anderen Fahrzeugen mit exponiertem Fahrer auftretenden Unfallverlauf angepasst ist.

Diese Aufgabe wird mit dem Fahrzeug nach Anspruch 1 gelöst.

Die Erfindung sieht ein Fahrzeug vor, dessen Fahrer bei einem Aufprall oder Sturz zunächst in eine geschützte Position überführt wird. Dazu ist ein Rückhaltesystem zur Fixierung des Fahrers auf seinem Sitz vorgesehen. Das Rückhaltesystem fixiert dabei den Fahrer im Bereich seines Beckens. Bei einem Aufprall von vorn oder schräg von vorn sowie auch bei einem Wegrutschen (low sider) und nachfolgendem Aufprall an ein Hindernis mit der Fahrzeugunterseite entstehen aufgrund der negativen Beschleunigung große an dem Fahrer angreifenden Kräfte. Diese bewegen den Kopf und Oberkörper des Fahrers ohne dessen Zutun in einer Schwenkbewegung in Richtung Lenker. Durch die Beckenfixierung des Fahrers werden die auftretenden Beschleunigungskräfte genutzt, um den Oberkörper des Fahrers in eine liegende Position zu bringen, in der sich der Kopf des Fahrers knapp oberhalb des Lenkers, zwischen den Lenkerenden oder auch etwas darunter befindet. Um diese Abtauchbewegung zu ermöglichen, ist zwischen dem am Lenker angeordneten Airbag und dem Sitz des Fahrers ein entsprechender Freiraum ausgebildet. Dieser Freiraum kann nach unten hin von einer vorzugsweise gepolsterten Auflagefläche für den Brustbereich des Fahrers begrenzt sein. In der liegenden Position mit Kopf zwischen den Lenkerenden ist der Fahrer bei schon entfalteten oder sich noch entfaltendem Airbag im Laufe des weiteren Unfallgeschehens gegen Verletzungen besser geschützt als in aufrecht sitzender Position. Ist das Fahrzeug verkleidet, taucht der Fahrer mit Ellenbogen, Oberkörper und Kopf in einen schützenden Aufnahmeraum des Fahrzeugs ein, wobei insbesondere der Kopf durch den vorgesehenen Airbag vor Verletzungen geschützt ist. Die Wirbelsäule des Fahrers liegt in Fahrtrichtung und bei Frontalaufprall in Aufprallrichtung. Der Fahrer ist in diesem Zustand doppelt fixiert, nämlich einerseits am Sitz durch das Rückhaltesystem und andererseits am Kopf durch den Airbag, der den Kopf vorzugsweise wie ein Helm umfasst. Dadurch ist auch die Wirbelsäule des Fahrers soweit geschützt, dass das Risiko für unfallbedingte Wirbelsäulenverletzungen und damit einhergehende Lähmungen verringert wird.

Bei einer bevorzugten Ausführungsform ist vor dem Airbag eine Stützstruktur zur Frontabstützung desselben vorgesehen. Diese Stützstruktur ist Teil einer Fahrzeugverkleidung. Sie kann durch eine formstabile Schale, eine Käfigstruktur oder dergleichen gebildet werden. Sie schützt bei einem Frontalaufprall den Airbag und dient diesem zur Abstützung. Die Stützstruktur kann auch verformbare Elemente umfassen, die eine Knautschzone bilden.

Der Airbag weist in gasgefülltem Zustand eine dem Sitz zugewandte Mulde zur Aufnahme des Kopfs des Fahrers auf. Der Airbag ist vorzugsweise ein reiner Kopfairbag, der in gasgefülltem Zustand vorwiegend Gesicht und Schädeldecke sowie seitliche Kopfpartien des Fahrers schützt. Er kann dazu etwa becherförmig ausgebildet sein, wobei die zur Aufnahme des Kopfes des Fahrers vorgesehene Mulde zu dem Fahrersitz hin weist.

Der Airbag ist ein Mehrstufenairbag, der mindestens zwei Füllstufen aufweist mit mindestens einem ersten Volumen, das vor dem Auftreffen des Kopfs (36) des Fahrers gasgefüllt ist, und mit mindestens einem zweiten Volumen, das während des Auftreffens oder nach dem Auftreffen des Kopfs des Fahrers auf dem Airbag gefüllt wird. Er kann einkammerig oder mehrkammerig ausgebildet sein. In einer ersten Füllstufe kann er zum Auffangen des Gesichtsbereichs und zum Abstützen seitlicher Kopfbereiche gefüllt sein. Im weiteren Verlauf kann er weiter zum Abstützen der oberen Schädeldecke gefüllt oder nachgefüllt werden. Hat er mehrere Kammern, kann dies dadurch erfolgen, dass entsprechende Kammern einzeln oder gruppenweise zeitlich gestaffelt gefüllt werden. Dazu können ein oder mehrere Gasgeneratoren dienen, die z.B. zeitlich gestaffelt gezündet werden. Wird nur ein Gasgenerator verwendet, können ein oder mehrere Steuerventile vorgesehen sein, um den Gasfluss zu steuern. Die Auslösung der Gasgeneratoren und/oder Betätigung der Ventile kann zeitabhängig oder ereignisabhängig erfolgen.

Die Auflagefläche für den Oberkörper des Fahrers kann eine ergonomisch geformte harte Fläche, eine gepolsterte Fläche oder auch eine aktiv das Unfallgeschehen beeinflussende Fläche sein. Letzteres kann bewirkt werden, indem an der Fläche ein oder mehrere kleinere als Polster dienende Airbags gefüllt werden.

An dem Fahrzeug können weitere Airbags, zum Beispiel an den Seitenspiegeln oder an der seitlichen Verkleidung vorgesehen werden, um weniger häufig auftretende, aber dennoch nicht unwahrscheinliche Unfallvarianten mit Schrägaufprall oder Seitenaufprall in ihren Folgen abzumildern. Ein solcher weiterer Airbag, insbesondere ein in dem, an dem oder in der Nähe des Seitenspiegels angeordneter, bei Schrägaufprall auszulösender Airbag deckt insbesondere den Lenker, d.h. den benachbarten Griff und die Armaturen desselben ab. Außerdem ist der Airbag etwas schräg zur Fahrtrichtung gerichtet. Seine Aufblasrichtung ist schräg zur Fahrzeugachse. Der Fahrer erhält beim Auftreffen dadurch einen Impuls zur Fahrzeugmitte. Dadurch wird bei einem Schrägaufprall der Kopf des Fahrers zu dem zentralen Airbag bewegt, der den Kopf des Fahrers dann wie bei einem reinen Frontalaufprall aufnimmt. Dieser Effekt kann insbesondere dadurch unterstützt werden, dass der spiegelseitige Airbag über dem zentralen Airbag angeordnet ist, dass der spiegelseitige Airbag schräg gestellt ist und/oder dass der spiegelseitige Airbag und der zentrale Airbag zeitlich gestaffelt ausgelöst werden.

Es ist außerdem eine Verkleidung vorhanden, die die Auflagefläche überragt. Auch können insbesondere in Seitenwangen der Verkleidung Überrollbügel vorgesehen sein, die bei Bedarf aus der Verkleidung vertikal nach oben bewegt werden, um einem Seitenairbag eine Stütze zu geben und/oder den Fahrer bei einem Fahrzeugüberschlag vor Rückenverletzungen zu schützen. Der Seitenairbag kann dazu genutzt werden, den Fahrer einen Impuls zur Fahrzeugmitte hin zu geben, so dass dieser wieder, wie bei einem Frontaufprall, in die geschützte Position überführt wird, in der sein Kopf in dem Zentralairbag zwischen den Griffen halten ist. Dies kann ggfs. in Zusammenwirkung mit einem Spiegelairbag erfolgen.

Die vorgeschlagene Erfindung bezieht sich auf ein Verfahren zum Schutz eines Fahrers, eines Fahrzeugs mit exponiertem Fahrer, das durch einen Lenker gesteuert wird, wie beispielsweise Dreirad, Quad oder dergleichen, wobei bei dem Verfahren die erste bei einem Unfall, insbesondere einem Frontalaufprallunfall auftretende Verzögerung dazu genutzt wird, den sitzenden Fahrer in eine Schutzposition zu überführen, in der er mit seinem Oberkörper etwa horizontal zwischen Sitz und Lenker liegt, wobei er im weiteren Unfallverlauf bei gasgefülltem Airbag in dieser Schutzposition gehalten wird. Durch die Überführung des Fahrers in eine Schutzposition unter Ausnutzung der auftretenden Beschleunigungskräfte ist dieser Vorgang vom Willen und Wollen des Fahrers unabhängig. Er wird zwangsläufig in die Schutzposition überführt, in der er durch den mindestens einen vorgesehenen Airbag einen definierten guten Schutz erhält. Damit kann der Schutz des Fahrers auf ein Maß gebracht werden, das den Schutz von Helmen, Rückenprotektoren Fahrerschutzanzügen und dergleichen übertrifft und das beschwerliche Tragen derselben überflüssig macht.

Weitere Einzelheiten der Erfindung ergeben sich aus der Zeichnung, der Beschreibung und Unteransprüchen. Es zeigen:
Figur 1 ein erfindungsgemäßes Motorrad in fahrbereitem Zustand, in perspektivischer seitlicher Ansicht,
Figur 2 das Motorrad nach Figur 1, in perspektivischer Ansicht, schräg von hinten,
Figur 3 das erfindungsgemäße Motorrad, in Seitenansicht,
Figur 4 das erfindungsgemäße Motorrad mit Fahrer in Fahrposition,
Figur 5 das erfindungsgemäße Motorrad mit teilweise gefülltem Airbag, in perspektivischer Ansicht schräg von hinten,
Figur 6 das erfindungsgemäße Motorrad ohne Fahrer mit vollständig gefülltem Airbag in perspektivischer Ansicht,
Figur 7 das Motorrad mit Fahrer in einer ersten Phase eines Unfallablaufs,
Figur 8 das Motorrad mit Fahrer im weiteren Unfallverlauf,
Figur 9 das Motorrad mit gefülltem Schrägaufprallairbag in einer perspektivischen Ansicht,
Figur 10 das Motorrad nach Figur 9 in einer alternativen perspektivischen Ansicht,
Figur 11 das Motorrad mit ausgelöstem Schrägaufprallairbag und Fahrer,
Figur 12 das erfindungsgemäße Motorrad mit ausgelöstem Seitenairbag und Fahrer.

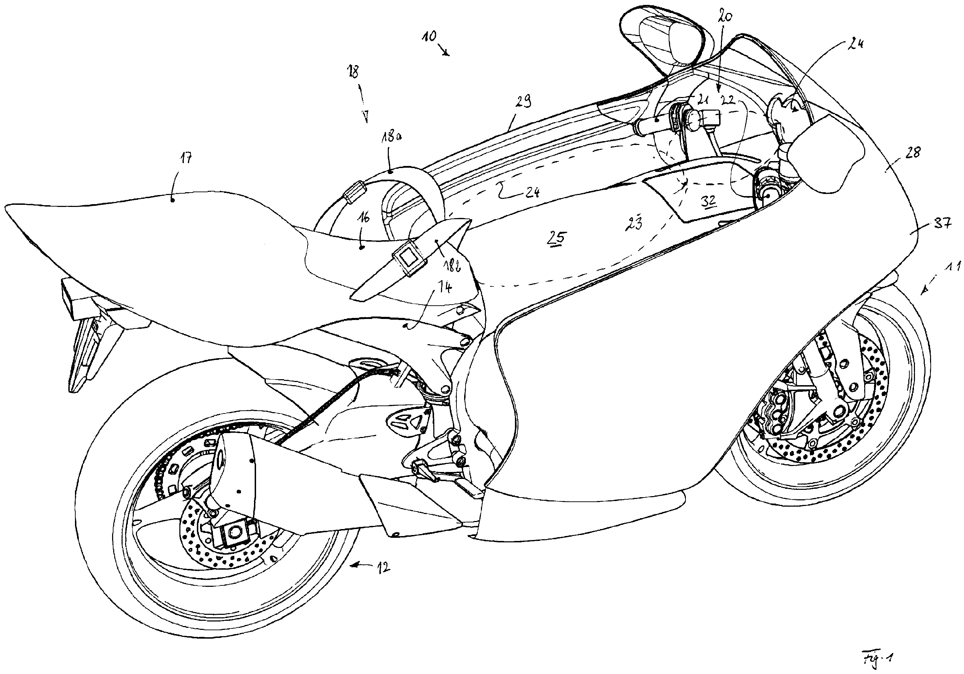

In Figur 1 ist stellvertretend für alle anderen Zwei-, Drei- oder Vierradfahrzeuge, an denen die Erfindung Anwendung finden kann, ein Motorrad 10 veranschaulicht, dass die Grundelemente eines herkömmlichen Motorrads aufweist. Dazu zählen ein lenkbares Vorderrad 11, ein Hinterrad 12, ein vorzugsweise das Hinterrad 12 antreibender Antriebsstrang 13, sowie ein ein- oder mehrteiliger Rahmen 14. Der Antriebsstrang 13 überträgt die Kraft von einer Primärantriebsquelle beispielsweise einem Ottomotor über Getriebemittel, wie zum Beispiel Schaltgetriebe und Kette 15 auf das Hinterrad 12. Jeder andere Antriebsstrang mit anderen Motoren und/oder Getriebemitteln bis hin zum Radnabenmotor in Vorder- oder Hinterrad ist ebenso gut anwendbar.

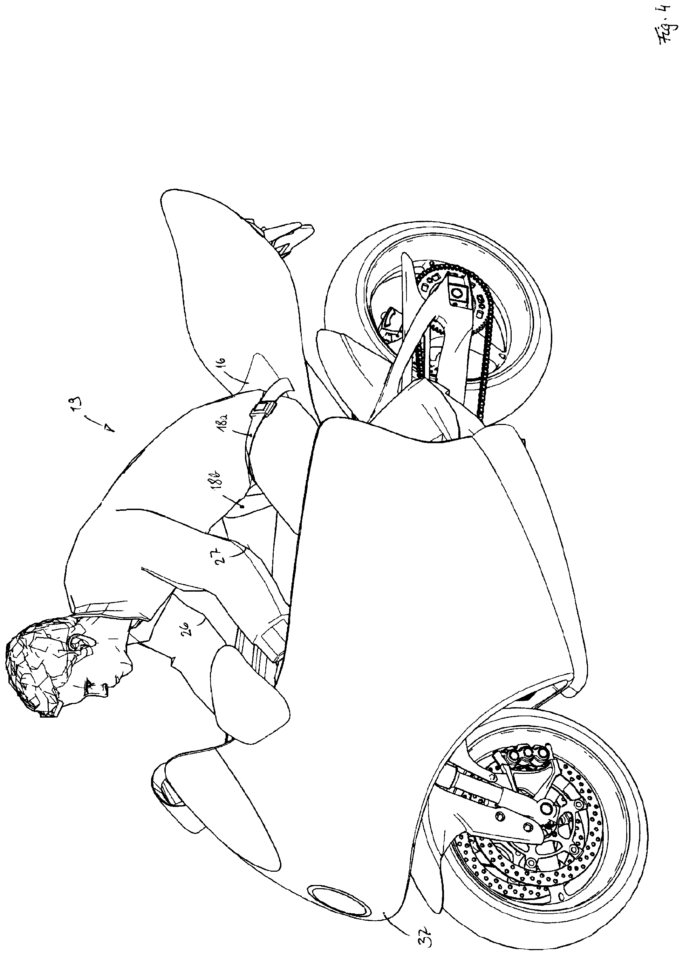

Das Motorrad 10 weist außerdem einen Sitz 16 für den Fahrer auf. Optional kann anstelle des Heckverkleidungsteils 17 ein Beifahrersitz vorgesehen sein. Dem Sitz 16 ist ein Rückhaltesystem 18 zugeordnet, das Gesäß und Becken eines Fahrers 19 (Figur 4) auf dem Sitz 16 soweit fixiert, dass der Fahrer 19 nicht von dem Sitz 16 nach vorn rutschen kann.

Das Motorrad 10 weist außerdem einen Lenker 20 auf, zu dem mindestens ein linker und rechter Griff 21, 22 gehören. Außerdem können an dem Lenker 20 die sonstigen motorradüblichen Bedienorgane vorgesehen sein. Zwischen den Griffen 21, 22 und ihrem zugehörigen Strukturen ist ein Freiraum 23 ausgebildet. Dieser weist eine Breite von bspw. 30 cm oder 40 cm auf. Die Breite dieses Freiraums ist vorzugsweise wenigstens so groß, dass der Kopf des Fahrers mit oder ohne Helm bequem zwischen den linken Griff 21 und dem rechten Griff 22 passt. Der Freiraum 23 ist in Figur 1 durch eine gestrichelte Ellipse veranschaulicht. Wie ersichtlich, ist die Armatur 24 des Motorrads 10 mit den üblichen Anzeigeinstrumenten soweit im Abstand vor dem Lenker 20 angeordnet, dass der Freiraum 23 nicht beeinträchtigt ist. Die Tiefe des Freiraums 23 in Vertikalrichtung ist vorzugsweise wenigstens etwa so groß, wie ein durchschnittlicher Kopfradius eines durchschnittlichen Fahrers, d.h. beispielsweise wenigstens etwa 10 cm.

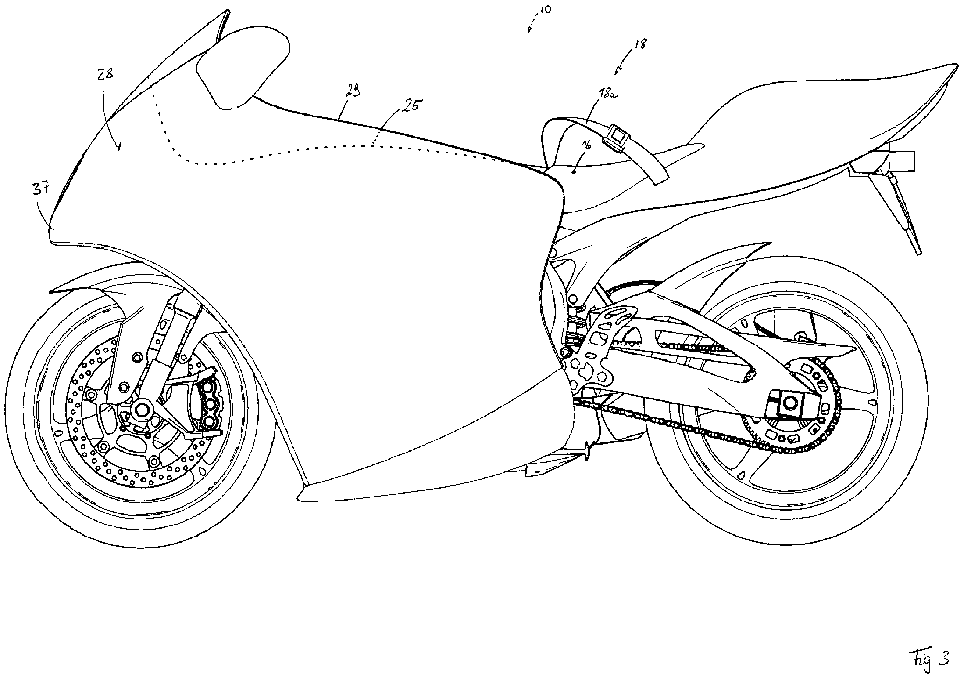

Zwischen dem Sitz 16 und dem Lenker 20 ist ein weiterer Freiraum 24 ausgebildet, der keine scharfen Erhebungen aufweist, die eine Liegeposition des Oberkörpers des Fahrers verhindern würden. Der Freiraum 24 kann nach unten durch eine Auflagefläche 25 abgeschlossen sein, deren Kontur aus Figur 3 hervorgeht. Sie ist dort gestrichelt eingetragen. Wie ersichtlich, ist die Auflagefläche 25 ausgehend von dem Sitz 16 im Wesentlichen flach und allenfalls um wenige Zentimeter sanft nach oben gewölbt.

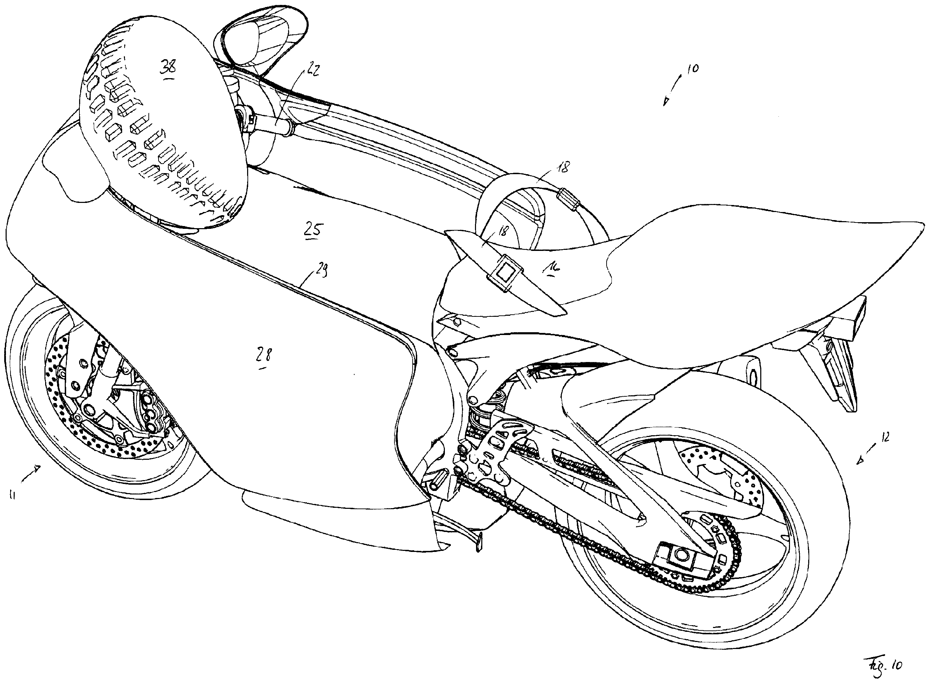

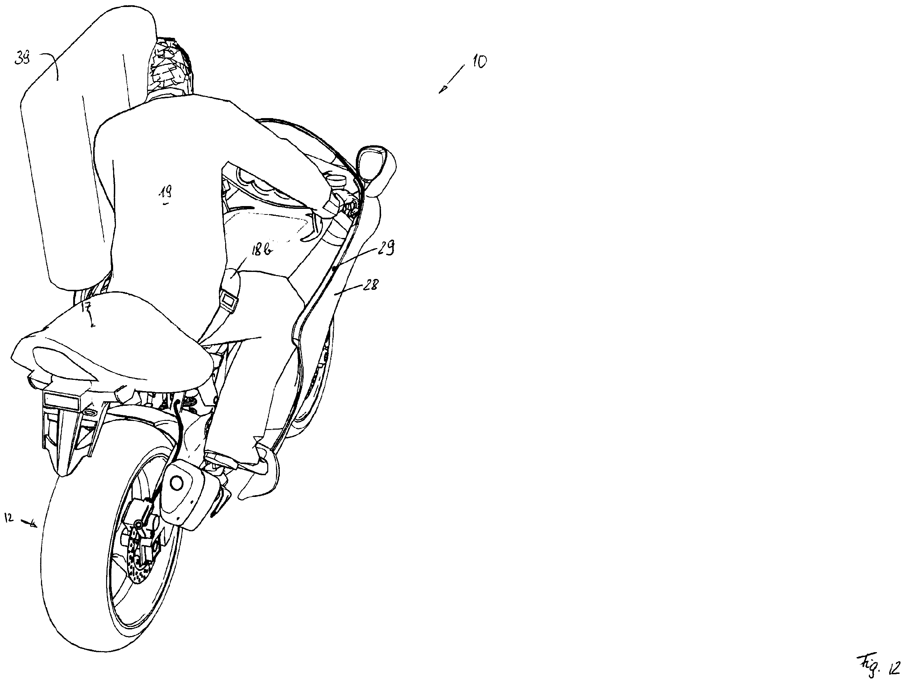

Zu dem Rückhaltesystem 18 gehört beispielsweise ein Beckengurt. Wie es in den Figuren 1 bis 12 veranschaulicht ist, können auch zwei Oberschenkelgurte 18a, 18b vorgesehen sein, die die Oberschenkel des Fahrers 19 umgreifen und ihn im Falle eines Auffahrunfalls daran hindern, von dem Sitz 16 nach vorn zu rutschen. Der Beckengurt bzw. die beiden Oberschenkelgurte 18a, 18b sind an dem Rahmen 14 des Motorrads 10 oder einem anderen fest mit diesem verbundenen Teil so verankert, dass die nötigen Haltekräfte aufgebracht werden können, um den Fahrer 19 auf dem Sitz 16 zu halten, und zwar auch und gerade bei einem Frontalcrash. Es können Gurtspanneinrichtungen vorgesehen sein, um einen lose liegenden Gurt zu Beginn des Unfalls zu straffen und den Fahrer fest zu halten.

Zu beiden Seiten der Auflagefläche 25 ist der Aufnahmeraum 24 vertikal nach unten vertieft und zwar mindestens so tief, dass mindestens der durchschnittsgroße Fahrer, vorzugsweise aber auch der größte denkbare Fahrer, wenn er sich mit dem Oberkörper auf die Auflagefläche 25 legt und seine Hände an den Griffen 21, 22 hält, mit seinen Ellenbogen 26, 27 nach unten abtauchen kann ohne mit den Ellenbogen oder anderen Teilen seines Arms auf gefährliche Weise anzustoßen.

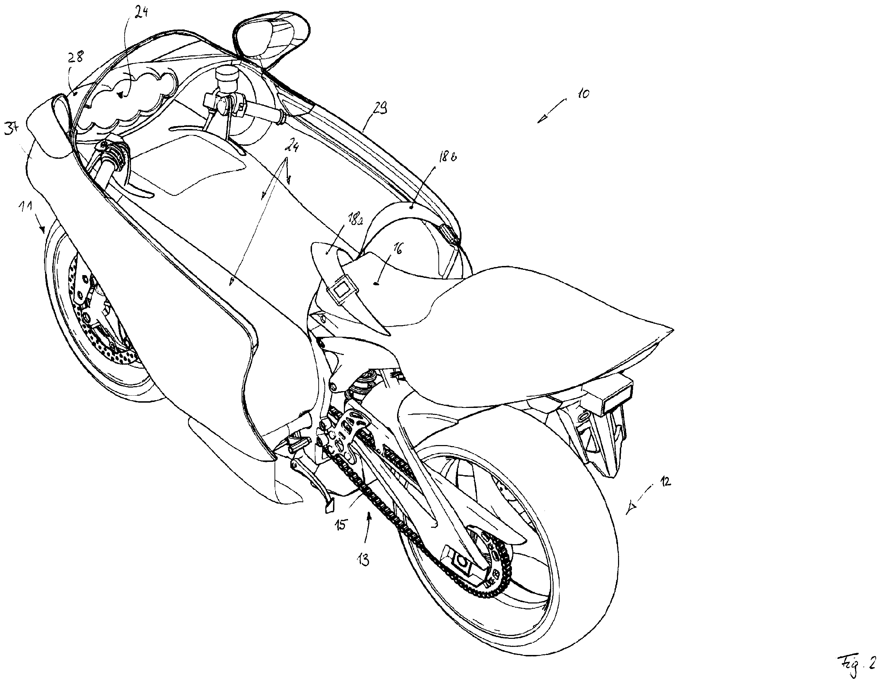

Vorzugsweise weist das Motorrad 10 eine Verkleidung 28 auf, die die Freiräume 23, 24 seitlich umfasst und abdeckt. Insbesondere erstreckt sich die Verkleidung 28, wie aus Figur 1 und 2 ersichtlich ist, vor den Armaturen 24 über das Vorderrad 11 und seitlich etwas bis zu dem Sitz 16. Dabei ist der obere Rand 29 der Verkleidung 28 vorzugsweise oberhalb der Auflagefläche 25 angeordnet, wie insbesondere aus Figur 3 ersichtlich ist. Insbesondere übersteigt der obere Rand 29 auch die Höhe der Griffe 21, 22. Während die Auflagefläche 25 somit unterhalb einer zwischen Sitz 16 und Armatur 24 gedachten Verbindungslinie bleibt erstreckt sich der obere Rand 29 vorzugsweise oberhalb einer solchen Verbindungslinie.

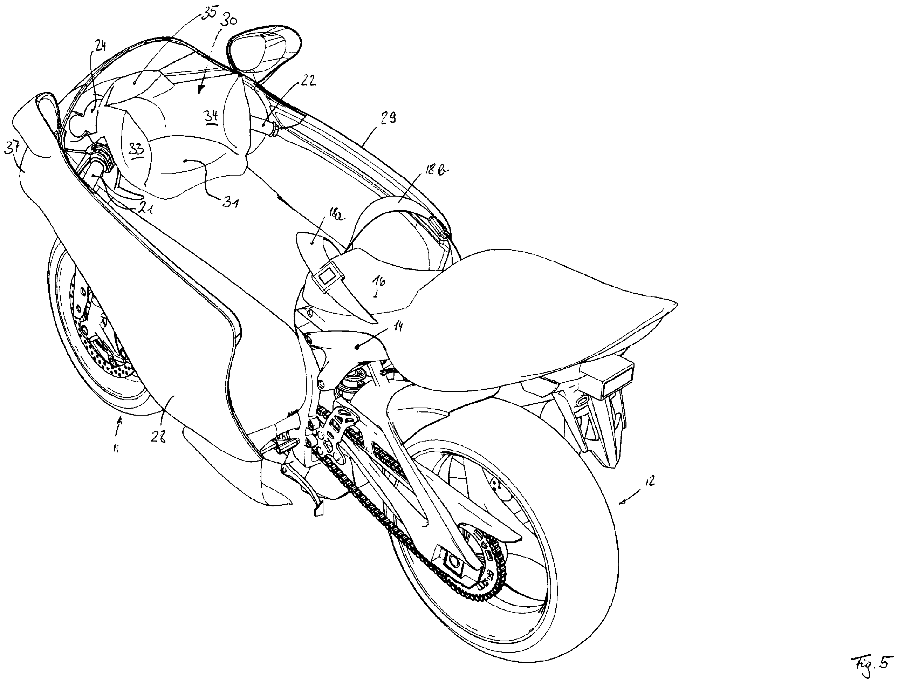

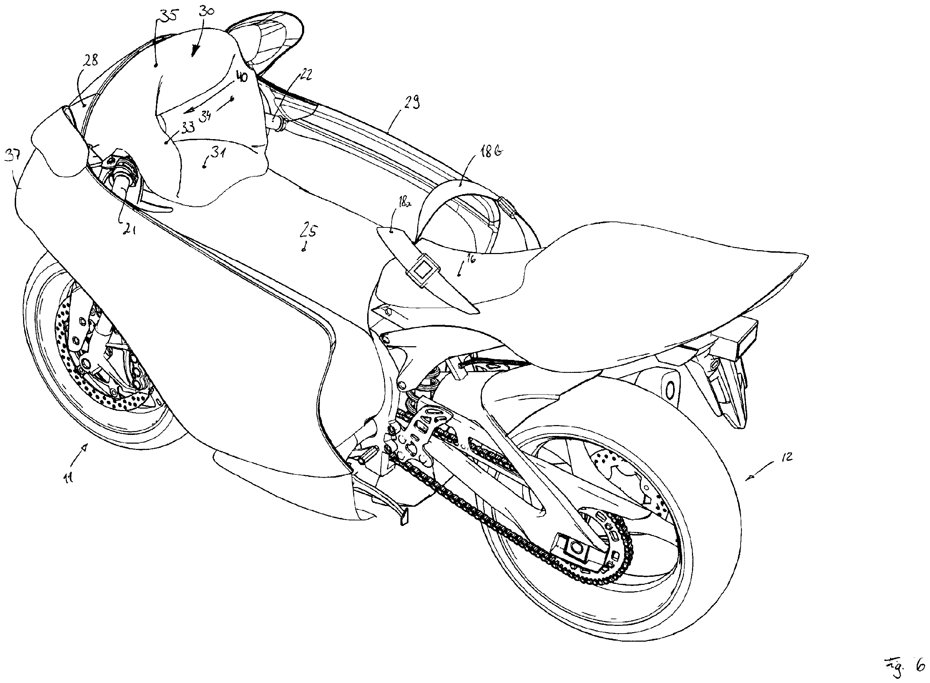

Bei dem erfindungsgemäßen Motorrad 10 ist im Bereich des Lenkers 20 bzw. der Armatur 24 ein Airbag 30 angeordnet, der in Figur 5 in teilentfalteter und in Figur 6 in vollständig entfalteter Form veranschaulicht ist. Er dient zur Auspolsterung des Freiraums 23 und zum Schutz sowie zur Fixierung des Kopfs des Fahrers 19. Dazu weist der Airbag 30 ein Gesichtskissen 31 auf, das sich auf einer untere Auflagefläche 32 entfaltet, die den Freiraum 23 begrenzt.

Weiter gehören zu dem Airbag 30, zumindest vorzugsweise, zwei Seitenkissen 33, 34, die, zumindest im teilgefülltem Zustand, nach oben voneinander divergierende Seitenflächen aufweisen und ein Polster zwischen dem Kopf des Fahrers und den Griffen 21, 22 bilden. Außerdem weist der Airbag 30 vorzugsweise ein Frontkissen 35 auf, das in dem in Figur 5 veranschaulichten Zustand noch unvollständig gefüllt ist. Figur 6 veranschaulicht es im gefüllten Zustand. Es legt sich vor die Armatur 24 und an die Innenfläche des vorderen steifen Teils der Verkleidung 28 an.

Zur Steuerung des Airbags 30 ist ein Unfallsensor vorgesehen. Dieser kann zum Beispiel als Beschleunigungssensor ausgebildet sein, um den Airbag 30 auszulösen, wenn Negativbeschleunigungen auftreten, die durch Wirkung der Fahrzeugbremsen physikalisch nicht aufgebracht werden können. Solche Negativbeschleunigungen sind beispielsweise Verzögerungen größer 2G. Es ist alternativ auch möglich, Verformungssensoren vorzusehen oder Radarsensoren, die einen unmittelbar bevorstehenden Unfall erkennen, indem sie die Annäherung eines größeren Objekts auf eine Distanz und mit einer Geschwindigkeit erfassen, die nach den physikalischen Gesetzen einen bevorstehenden Aufprall als unvermeidbar erscheinen lassen. In einem solchen Fall können zum Beispiel die Oberschenkelgurte 18a, 18b (oder ein sonstiger Gurt) gestrafft und der Airbag 30 zumindest vorgefüllt oder teilgefüllt werden. Zum Beispiel können das Gesichtskissen 31 und die Seitenkissen 33, 34 unmittelbar vor dem Eintreten des Unfallereignisses gefüllt oder vorgefüllt werden. Alternativ können das Gesichtskissen 31 und die Seitenkissen 33, 34 auch erst bei Auftreten einer unfallbedingten Negativbeschleunigung gefüllt werden. Im weiteren Ablauf des Unfallvorgangs wird der Airbag 30 von der Airbagsteuerung dann in einer zweiten Stufe vollständig gefüllt, so dass auch das Frontalkissen 35 vollständig gefüllt ist.

Der Airbag 30 bildet in voll entfaltetem Zustand ein etwa becherartiges Kissen mit einer Mulde 40, die dazu geeignet ist, den Kopf des Fahrers 19 aufzunehmen und zumindest zeitweilig helmartig zu umschließen.

Mit dem insoweit beschriebenen Motorrad 10 läuft ein Frontalaufprall in Geradeausfahrt oder auch in Schräglage typischerweise wie folg ab:

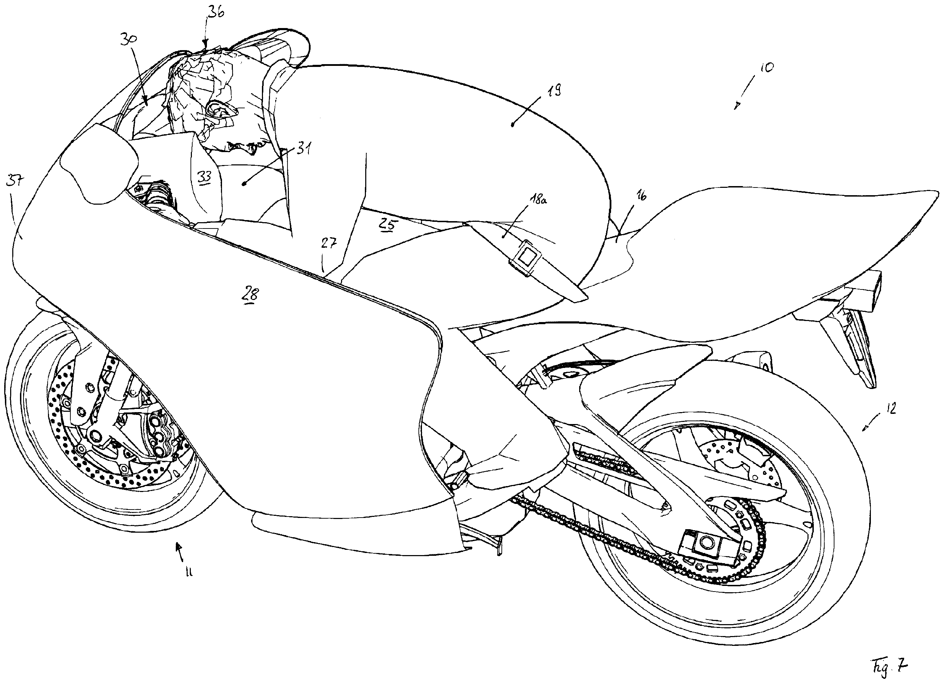

Zu Beginn des Unfallgeschehens, d.h. beim Erkennen einer Unfallsituation, beispielsweise aufgrund übergroßer Negativbeschleunigung oder des Erkennens eines schnell sich auf die Fahrzeugfront zu bewegenden Objekts und des Unterschreitens eines Mindestabstands wird der Airbag 30 ausgelöst. Vorzugsweise geschieht dies in zwei Stufen und es wird zunächst das Gesichtskissen 31 sowie die Seitenkissen 33, 34 gefüllt. Falls Gurtstraffer vorhanden sind, werden diese aktiviert, um das Gesäß des Fahrers 19 fest auf dem Sitz 16 zu halten. Durch die auftretende Negativbeschleunigung wird der Fahrer 19 ohne sein Wissen und Wollen durch seine eigene Trägheitskraft relativ zu dem Motorrad 10 nach vorn gezogen. Damit werden sein Oberkörper und sein Kopf 36 nach unten geschleudert. Während sich der Oberkörper auf die gegebenenfalls gepolsterte Auflagefläche 25 legt, tauchen die Ellenbogen 26, 27 in den Freiraum und somit hinter der Verkleidung 28 ein. Figur 7 veranschaulicht diese Bewegung des Fahrers. Sein Gesicht trifft damit zwischen den Seitenkissen 33, 34 auf das Gesichtskissen 31.

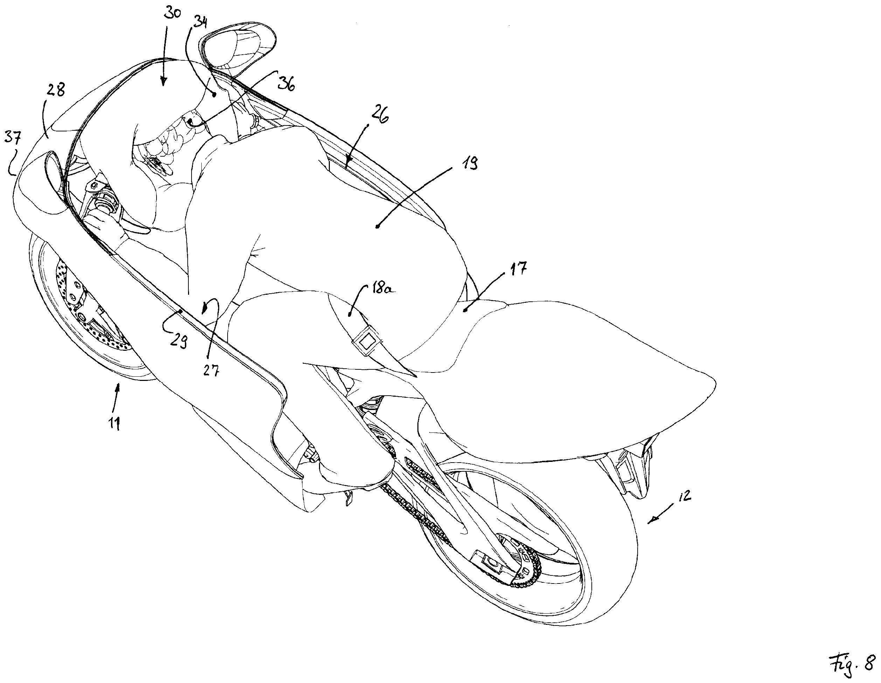

Der Fahrer befindet sich im weiteren Unfallablauf in der Schutzposition nach Figur 8.

Der Airbag 30 wird nun in einer zweiten Stufe aufgeblasen. Als Signal dazu kann zum Beispiel ein Druckstoß dienen, der sich durch das Auftreffen des Kopfes 36 auf dem teilgefüllten Airbag 30 ergibt. Auch andere Sensormittel können vorgesehen sein, wie beispielsweise Sensoren, die die Position der Ellenbogen 26, 27 erfassen, Sensoren, die das Auftreffen des Oberkörpers auf der Auflagefläche 25 erfassen oder ähnliches. Die zweistufige Füllung des Airbags 30 kann alternativ auch rein zeitgesteuert erfolgen. Der Airbag wird damit in den Zustand nach Figur 6 versetzt, in dem er ein Polster zwischen der Schädeldecke des Fahrers und dem vorderen käfigartigen Teil der Verkleidung 28 bildet. Außerdem kann der Airbag auch das Hinterhaupt, d.h. den Hinterkopf des Fahrers überdecken. der Airbag 30 bildet damit ein becher- oder helmartiges Kissen, das den Kopf des Fahrers 19 nicht nur schützt, sondern auch in der Schutzposition fixiert.

Das Motorrad 10 kann bis zu einem gewissen Grad eine Knautschzone enthalten. Beispielsweise können das Vorderrad 11 und die zugeordnete Radführung Verformungsarbeit aufnehmen. Auch kann ein vorderer Nasenbereich 37 der Verkleidung 28 als Knautschzone dienen.

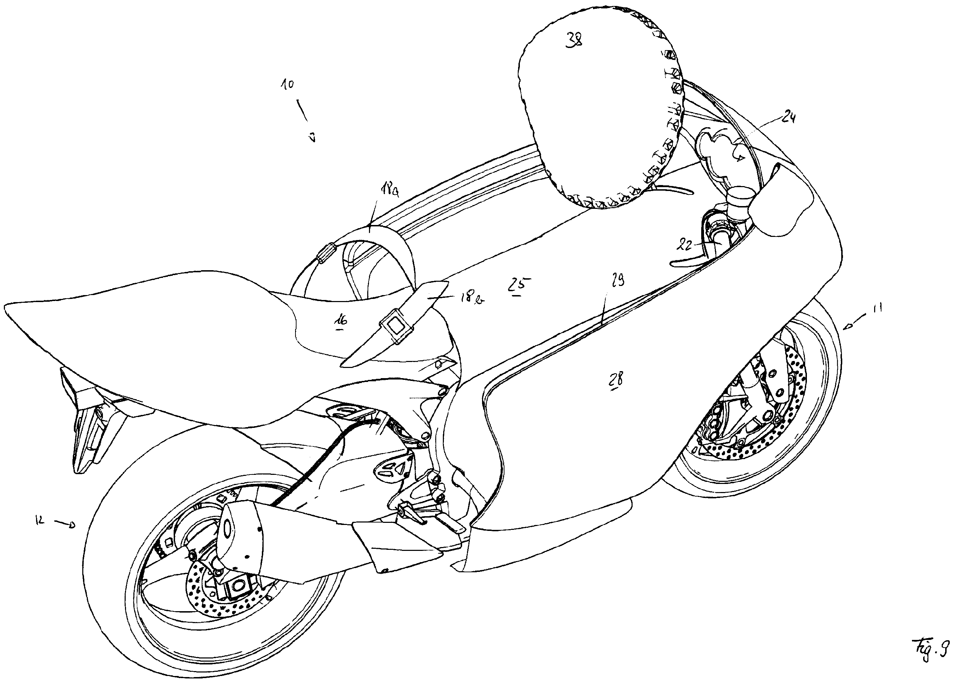

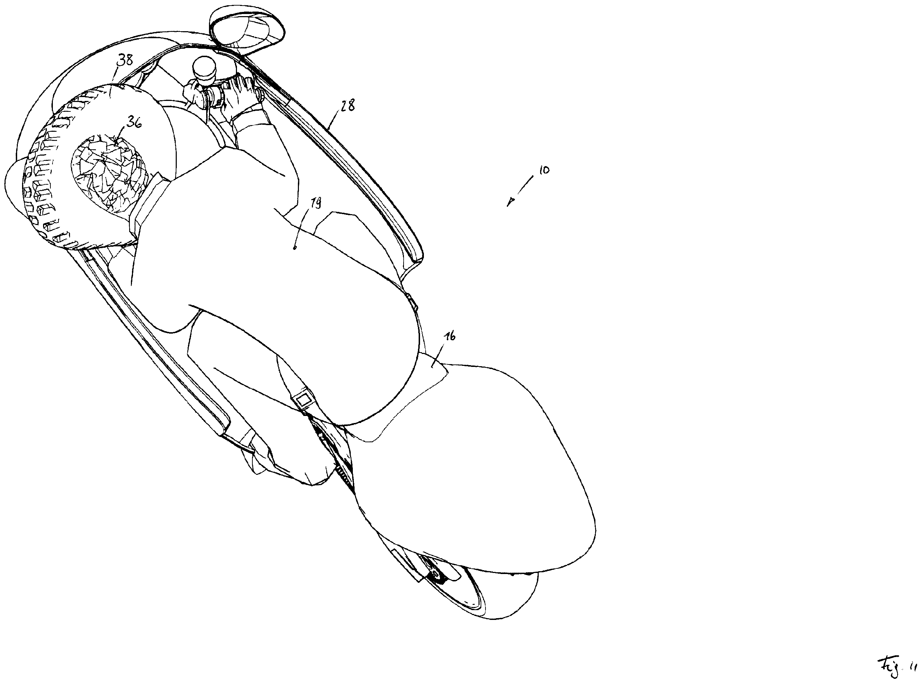

Weitere Unfallschutzmaßnahmen sind möglich. Beispielsweise können an, in oder in der Nähe der Seitenspiegel ein oder mehrere Airbags 38 vorgesehen sein, wie es aus Figur 9 ersichtlich ist. Diese können den Kopf 36 des Fahrers 19 bei einem Schrägaufprall schützen, wie es Figur 11 veranschaulicht. Der Airbag 38 kann dabei als ein oder mehrstufiger Airbag ausgebildet sein. Insbesondere kann vorgesehen sein, dass auf eine Zündung des Airbags 30 verzichtet wird, wenn der Airbag 38 ausgelöst wird. Ansonsten gilt die obige Beschreibung unter Zugrundelegung der bereits eingeführten Bezugszeichen entsprechend.

Weiter ist es ergänzend möglich, einen Seitenairbag 39 vorzusehen, der bei Unfällen in starker Schräglage, seitlichem Wegrutschen oder auch bei seitlichem Aufprall anderer Kraftfahrzeuge einen gewissen Schutz für Kopf und Schulter des Fahrers 19 erbringen kann. Ein solcher Seitenairbag 29 kann beispielsweise im oberen Rand 29 der Verkleidung 28 insbesondere im Bereich zwischen Lenker 20 und Sitzt 16 untergebracht sein. Der Seitenairbag 29 kann insbesondere in Kombination mit dem Airbag 30 und/oder dem Airbag 38 vorgesehen sein. Er kann gesondert, isoliert oder in Verbindung mit den anderen Airbags 30, 38 abgewehrt werden.

Anstelle der zwei- oder mehrstufigen Ausbildung des Airbags 30 mit mehreren Kammern oder Kissen, die jeweils nacheinander mit Gas gefüllt werden, ist es auch möglich, mehrere kleinere Airbags zu verwenden, die einzeln oder gruppenweise zeitlich gestaffelt gezündet werden. Beispielsweise können das Gesichtskissen 31 und die Seitenkissen 33, 34 einen ersten Airbag und das Frontalkissen 35 einen zweiten Airbag bilden. Die beiden Airbags werden dann zeitlich gestaffelt oder ereignisabhängig gestaffelt gezündet.

Es ist auch möglich, das Gesichtskissen 31 als ersten Airbag zu füllen und gleichzeitig die beiden Seitenkissen 33, 34 und das Frontalkissen 35 zunächst vorzufüllen und im weiteren Unfallverlauf sobald der Kopf auf dem Gesichtskissen 31 liegt vollständig zu füllen, um den Kopf 36 zu umschließen. In diesem Fall können das Gesichtskissen 31 als erster Airbag und die Seitenkissen 33, 34 sowie das Frontalkissen 35 als zweiter zweistufig ausgebildeter Airbag ausgebildet sein.

Erfindungsgemäß wird für ein Motorrad, ein Quad, ein mit oder ohne Schräglage fahrbares Dreirad oder ähnliche Fahrzeuge mit exponiertem Fahrer ein Fahrersicherheitssystem vorgeschlagen, das den Fahrer zu Beginn des Unfalls in eine geschützte Position überführt und ihn während des Unfalls in geschützter Position hält. Dazu ist zwischen dem Lenker 20 und dem Sitz 16 ein Aufnahmeraum 24 für den Oberkörper des Fahrers und zwischen den Griffen 21, 22 des Lenkers 20 ein Aufnahmeraum 23 für den Kopf 36 des Fahrers ausgebildet. Zumindest der zur Aufnahme des Kopfes 36 dienende Aufnahmeraum 23 ist mit einem Airbag 30 versehen. Dieser wird vorzugsweise zweistufig aktiviert, um seine volle Größe erst nach dem Auffangen des Kopfes 36 des Fahrers 19 zu entwickeln. Dadurch wird der Kopf 36 in geschützter Position aktiviert. Gleichzeitig hält ein Rückhaltesystem 18 den Fahrer im Beckenbereich fest an dem Sitz 16 und somit an dem Motorrad. Durch die liegende Position des Fahrers 19 während des Unfallgeschehens ist dieser vor Verletzungen weitgehend geschützt. Insbesondere ist der Kopfschutz des Fahrers 19 durch den Airbag 30 so intensiviert, dass der Fahrer einen wesentlich leichteren Helm tragen oder auf diesen ganz verzichten kann.

### Bezugszeichenliste:

- 10: Motorrad
- 11: Vorderrad
- 12: Hinterrad
- 13: Antriebsstrang
- 14: Rahmen
- 15: Kette
- 16: Sitz
- 17: Verkleidungsteil
- 18: Rückhaltesystem
- 19: Fahrer
- 20: Lenker
- 21: linker Griff
- 22: rechter Griff
- 23: Freiraum (für den Fahrerkopf)
- 24: Freiraum (für den Fahreroberkörper)
- 25: Auflagefläche
- 26: rechter Ellenbogen des Fahrers
- 27: linker Ellenbogen des Fahrers
- 28: Verkleidung
- 29: oberer Rand der Verkleidung 28
- 30: Airbag
- 31: Gesichtskissen
- 32: Auflagefläche
- 33: linkes Seitenkissen des Airbags 30
- 34: rechtes Seitenkissen des Airbags 30
- 35: Frontalkissen
- 36: Kopf
- 37: Nasenbereich der Verkleidung 27
- 38: Airbag für Schrägaufprall
- 39: Seitenairbag
- 40: Mulde

## Patentansprüche

1. Zweiradfahrzeug, Quad, Dreirad, insbesondere Motorrad (10),
mit einem Sitz (16) für den Fahrer (19),
mit einem Rückhaltesystem (18) zur Fixierung des Fahrers (19) im Beckenbereich auf seinem Sitz (16),
mit einem Airbag (30), der in entfaltetem Zustand in Horizontalrichtung in Oberkörperdistanz zu dem Sitz (16) angeordnet ist, wobei der Airbag (30) ein Mehrstufenairbag ist, mit mindestens einem ersten Volumen (31), das vor dem Auftreffen des Kopfs (36) des Fahrers (19) gasgefüllt ist, und mit mindestens einem zweiten Volumen (35), das während des Auftreffens oder nach dem Auftreffen des Kopfs (36) des Fahrers (19) auf dem Airbag (30) gefüllt wird, und wobei der Airbag (30) in gasgefülltem Zustand eine dem Sitz (16) zugewandte Mulde (40) zur Aufnahme des Kopfs (36) des Fahrers (19) aufweist,
mit einem sich zwischen dem Airbag (30) und dem Sitz (16) erstreckenden Freiraum (24) und einer Auflagefläche (25) für den Oberkörper des Fahrers (19),
und mit einer Verkleidung (28), die die Auflagefläche (25) überragt.

2. Fahrzeug nach Anspruch 1, **dadurch gekennzeichnet, dass** vor dem Airbag (30) eine Stützstruktur (28) zur Frontabstützung des Airbags (30) angeordnet ist.

3. Fahrzeug nach einem der vorigen Ansprüche, **dadurch gekennzeichnet, dass** der Airbag (30) als Kopfairbag ausgebildet ist.

4. Fahrzeug nach einem der vorigen Ansprüche, **dadurch gekennzeichnet, dass** das Rückhaltesystem (18) für den Fahrer (19) einen Beckengurt und/oder oberschenkelumfassende Gurte (18a, 18b) aufweist.

5. Fahrzeug nach einem der vorigen Ansprüche, **dadurch gekennzeichnet, dass** das Rückhaltesystem (18) bezüglich eines zu dem Motorrad (10) gehörenden Fahrzeugrahmens (14) ortsfest angeordnet ist.

6. Fahrzeug nach einem der vorigen Ansprüche, **dadurch gekennzeichnet, dass** wenigstens ein weiterer Airbag (38, 39) im Bereich eines Spiegels oder an einem seitlichen Verkleidungsrand (29) vorgesehen ist.

7. Fahrzeug nach Anspruch 6, **dadurch gekennzeichnet, dass** der im Bereich eines Spiegels angeordnete Airbag (38) in aufgeblähtem Zustand den benachbarten, darunterliegenden Griff (21 oder 22) abdeckt.

8. Fahrzeug nach Anspruch 6 oder 7, **dadurch gekennzeichnet, dass** die Richtung der Auslösebewegung des im Bereich eines Spiegels angeordneten Airbags (38) schräg zu der Fahrzeuglängsachse orientiert ist, um einen zur Fahrzeugmitte hin gerichteten Impuls auf den auftreffenden Fahren (19) zu geben.

9. Verfahren zum Schutz eines Fahrers (19) eines Fahrzeugs nach einem der vorhergehenden Ansprüche, insbesondere eines Zweiradfahrzeugs, Dreirads, Quads, Motorrollers oder dergleichen, wobei bei dem Verfahren:
der im Beckenbereich fixierte Fahrer (19) unter der Einwirkung der bei einem Aufprall auftretenden Verzögerungskräfte in eine Liegeposition überführt wird, in der Gesicht und Oberkörper des Fahrers (19) auf einer zumindest im Gesichtsbereich durch Airbag (30) gepolsterten Auflagefläche (32) abgestützt sind, und wobei der liegende Fahrer (19) im weiteren Unfallverlauf insbesondere im Kopfbereich von dem Airbag (30) oder von einem weiteren Airbag aufgenommen ist.

10. Verfahren nach Anspruch 9, **dadurch gekennzeichnet, dass** der Kopf (36) des Fahrers von dem Airbag (30) zwischen zwei Seitenkissen (33, 34) auf einem Gesichtskissen (31) aufgefangen wird und dass der Kopf (36) des liegenden Fahrers (19) bei aufgeblähtem Airbag (30) von den Seitenkissen (34, 34) zwischen den Griffen (21, 22) gehalten wird, während ein Frontalkissen gefüllt wird oder ist.

## Claims

1. Two-wheeled vehicle, quad bike, tricycle, especially motorcycle (10),
comprising a seat (16) for the driver (19),
comprising a restraint system (18) to fasten the driver (19) in the pelvis area on his seat (16), comprising an airbag (30), which is placed when inflated in horizontal direction in a distance from the seat (16) corresponding to the upper part of the body, wherein the airbag (30) is a multi-stage airbag, comprising at least one first volume (31), which is filled with gas before the impingement of the driver's (19) head (36), and comprising at least a second volume (35), which is inflated during or after the impact of the driver's (19) head (36), and wherein the airbag (30) when inflated provides a cavity (40) facing the seat (16) to retain the driver's (19) head (36),
comprising a free space (24) reaching from the airbag (30) to the seat (16) and an supporting area (25) for the upper part of the driver's (19) body,
and comprising a fairing (28), exceeding the supporting area (25).

2. Vehicle according to claim 1, **characterized in that** a supporting structure (28) is placed in front of the airbag (30) to support it.

3. Vehicle according to any of the preceding claims, **characterized in that** the airbag (30) is designed as head airbag.

4. Vehicle according to any of the preceding claims, **characterized in that** the restraint system (18) for the driver (19) comprises a pelvis belt and/or a belt (18a, 18b) embracing the thighs.

5. Vehicle according to any of the preceding claims, **characterized in that** the restraint system (18) is fixed related to a frame (14) belonging to the motorcycle (10).

6. Vehicle according to any of the preceding claims, **characterized in that** an additional airbag (38, 39) is provided in the region of a rear-view mirror or on the edge of a side fairing (29).

7. Vehicle according to claim 6, **characterized in that** when inflated the airbag (38) mounted in the region of a rear-view mirror covers the adjacent, underlying handles (21 or 22).

8. Vehicle according to claim 6 or 7, **characterized in that** the direction of the inflating movement of the airbag (38) located in the region of a rear-view mirror is oriented obliquely to the longitudinal axis of the vehicle, in order to give to the impinging driver (19) an impulse directed towards the centre of the vehicle.

9. Method to protect the driver (19) of a vehicle according to any of the preceding claims, especially a two-wheeled vehicle, tricycle, quad-bike, scooter or similar, **characterized in that**:
the driver (19) fastened in the pelvis area is transferred into a laid down position by means of the deceleration forces occurring during a collision, in which the face and the upper part of the driver's (19) body are supported by an supporting area (32) that is at least cushioned in the facial region by means of the airbag (30), and wherein
the lying driver (19), particularly in the head region, is contained during the further course of the accident by means of the airbag (30) or by means of an additional airbag.

10. Method according to claim 9, **characterized in that** the driver's head (36) is absorbed by the airbag (30) between two side cushions (33, 34) on a facial cushion (31) and that when the airbag (30) is inflated the head (36) of the lying driver (19) is being held between the handles (21, 22) by the side cushions (33, 34), while a frontal cushion is or is being inflated.

## Revendications

1. Véhicule à deux roues, quad, tricycle, en particulier motocyclette (10),
comprenant un siège (16) pour le conducteur (19),
comprenant un système de retenue (18) fixant le conducteur (19) au niveau du bassin sur son siège (16),
avec un airbag (30), qui dans son état déployé est placé à une distance du siège (16) dans la direction horizontale correspondant au haut du corps, l'airbag (30) étant un airbag à plusieurs étages, comprenant au moins un premier volume (31), qui est rempli de gaz avant que la tête (36) du conducteur (19) ne le percute, et comprenant au moins un deuxième volume (35), qui se remplit pendant ou après que la tête (36) du conducteur (19) rencontre l'airbag (30), l'airbag (30) dans son état gonflé de gaz présentant un creux (40) en direction du siège (16) afin de recevoir la tête (36) du conducteur (19),
comprenant un espace libre (24) s'étendant entre l'airbag (30) et le siège (16) et une surface d'appui (25) pour le buste du conducteur (19),
et comprenant un carénage (28), qui dépasse de la surface d'appui (25).

2. Véhicule selon la revendication 1, **caractérisé en ce qu'**une structure de soutient (28) est placée devant l'airbag (30) afin de le supporter frontalement.

3. Véhicule selon l'une quelconque des revendications précédentes, **caractérisé en ce que** l'airbag (30) est en forme d'airbag pour tête.

4. Véhicule selon l'une quelconque des revendications précédentes, **caractérisé en ce que** le système de retenue (18) pour le conducteur (19) comprend une ceinture de bassin et/ou une ceinture (18a, 18b) englobant les cuisses.

5. Véhicule selon l'une quelconque des revendications précédentes, **caractérisé en ce que** le système de retenue (18) est placé fixement par rapport à un cadre (14) appartenant à la motocyclette (10).

6. Véhicule selon l'une quelconque des revendications précédentes, **caractérisé en ce qu'**au moins un airbag supplémentaire (38, 39) est prévu au niveau d'un rétroviseur ou sur un bord du carénage latéral (29).

7. Véhicule selon la revendication 6, **caractérisé en ce que** l'airbag placé au niveau d'un rétroviseur (38) lorsqu'il est gonflé recouvre la poignée avoisinante (21 ou 22) se trouvant en dessous.

8. Véhicule selon la revendication 6 ou 7, **caractérisé en ce que** la direction du mouvement de déploiement de l'airbag situé au niveau d'un rétroviseur (38) est orientée de biais par rapport à l'axe longitudinal du véhicule, afin de transmettre au conducteur (19) rencontrant ledit airbag une impulsion dirigée vers le centre du véhicule.

9. Procédé de protection d'un conducteur (19) de véhicule selon l'une quelconque des revendications précédentes, en particulier d'un véhicule à deux roues, tricycle, quad, scooter ou semblable, selon lequel:
le conducteur (19) fixé au niveau du bassin se trouve transféré par l'effet des forces de décélération survenant lors d'un choc en position allongée, dans laquelle le visage et le haut du corps du conducteur (19) sont supportés par une surface d'appui amortissante (32) comprenant au moins au niveau du visage un airbag (30),
le conducteur (19) allongé étant retenu pendant le déroulement ultérieur de l'accident en particulier au niveau de la tête par l'airbag (30) ou par un airbag supplémentaire.

10. Procédé selon la revendication 9, **caractérisé en ce que** la tête (36) du conducteur est absorbée par l'airbag (30) entre deux coussins latéraux (33, 34) sur le coussin de visage (31) et que la tête (36) du conducteur (19) allongé est maintenue par les coussins latéraux (33, 34) entre les poignées (21, 22) lorsque l'airbag (30) est gonflé, pendant qu'un coussin frontal est ou est en train d'être gonflé.
